# FASCICULE DE BREVET EUROPEEN

(11) **EP 3 867 509 B1**
(45) Date de publication et mention de la délivrance du brevet: **24.04.2024**
(21) Numéro de dépôt: 19835452.4
(22) Date de dépôt: 19.11.2019
(51) Int. Cl.: F02C 7/28, F01D 11/00, F16J 15/02, F01D 25/26, F16J 15/06

(54) **DISPOSITIF AMELIORE D'ETANCHEITE A L'AIR DESTINE A ETRE INTERPOSE ENTRE UN ELEMENT DE CARTER DE TURBOMACHINE D'AERONEF A DOUBLE FLUX, ET UN ELEMENT DE NACELLE**
VERBESSERTE LUFTDICHTUNGSVORRICHTUNG ZUR EINFÜHRUNG ZWISCHEN EINEM ZWEISTROM-TURBINENTRIEBWERKGEHÄUSE UND EINEM GONDELTEIL
IMPROVED AIR-SEALING DEVICE INTENDED TO BE INSERTED BETWEEN AN AIRCRAFT DUAL-FLOW TURBINE ENGINE CASING ELEMENT AND A NACELLE ELEMENT

(30) Priorité: 05.12.2018 FR 1872399
(43) Date de publication de la demande: 25.08.2021
(73) Titulaire: SAFRAN AIRCRAFT ENGINES, 75015 Paris (FR)
(72) Inventeur: JACON, Bruno, Alexandre, Didier, 77550 MOISSY-CRAMAYEL (FR); ACHBARI, Baghdad, 77550 MOISSY-CRAMAYEL (FR); ALIOUAT, Faouzi, 77550 MOISSY-CRAMAYEL (FR); SIMONOTTI, Hervé, 77550 MOISSY-CRAMAYEL (FR)
(74) Mandataire: Brevalex
(86) Numéro de dépôt international: PCT/FR2019/052744
(87) Numéro de publication internationale: WO 2020/115383

(56) Documents cités:
- US-A- 2 451 450
- US-A1- 2011 024 994
- US-A1- 2013 341 875

## Description

### DOMAINE TECHNIQUE

L'invention se rapporte aux dispositifs d'étanchéité à l'air destinés à être interposés entre un élément de carter de turbomachine d'aéronef à double flux, et un élément de nacelle adjacent à l'élément de carter.

L'invention s'applique à tout type de turbomachine à double flux, et en particulier à un turboréacteur.

### ETAT DE LA TECHNIQUE ANTERIEURE

Dans une turbomachine d'aéronef à double flux, il est généralement prévu une ou plusieurs zones d'étanchéité entre le carter de la turbomachine et la nacelle, en particulier pour limiter les fuites du flux secondaire, notamment en direction d'un compartiment de soufflante de la turbomachine.

Pour limiter ces fuites d'air potentielles, des solutions conventionnelles peuvent être envisagées, mais elles ne se révèlent généralement pas totalement satisfaisantes. En effet, les dispositifs d'étanchéité destinés à être implantés dans ces zones doivent répondre à de nombreuses contraintes, rendant leur conception particulièrement complexe. L'une des principales contraintes réside dans le fait de devoir présenter une rigidité suffisamment élevée en fonctionnement pour résister à la pression de l'air, et ce quel que soit le niveau de déformation du dispositif d'étanchéité. Cet objectif pousse à prévoir une rigidité fortement élevée, mais celle-ci doit néanmoins rester suffisamment faible pour permettre le montage de l'élément de nacelle sur l'élément de carter.

Ces contraintes antinomiques rendent la conception délicate. Il subsiste par conséquent un besoin d'aboutir à un dispositif d'étanchéité à l'air dont la conception garantit les fonctions désirées. Les documents US2011/024994A1, US2451450A et US2013/341875A1 divulguent des dispositifs d'étanchéité selon l'art antérieur.

### RESUME DE L'INVENTION

Pour répondre au besoin, l'invention a tout d'abord pour objet un dispositif d'étanchéité à l'air destiné à être interposé entre un élément de carter de turbomachine d'aéronef à double flux et un élément de nacelle, le dispositif d'étanchéité comprenant les caractéristiques de la revendication 1.

Les protubérances permettent avantageusement de limiter l'affaissement de la portion d'étanchéité du dispositif. Elles confèrent ainsi une réponse satisfaisante au besoin exprimé, notamment en assurant une rigidité accrue en cas de compression maximale, grâce à l'appui conféré par ces protubérances.

L'invention prévoit de préférence au moins l'une des caractéristiques techniques optionnelles suivantes, prises isolément ou en combinaison.

Chaque protubérance s'étend en direction d'un centre du creux délimité par la portion d'étanchéité.

Selon l'invention, en section transversale du dispositif d'étanchéité, chaque protubérance définit une direction de hauteur de protubérance agencée de manière à former un angle (A1) compris entre 40 et 60° avec une direction selon laquelle s'étend la languette de fixation. De préférence, cet angle est de l'ordre de 50°. Ces valeurs de l'angle A1 correspondent à celles observées à l'état non-contraint de la portion d'étanchéité du dispositif.

Les directions de hauteur de protubérance des deux protubérances sont confondues, en passant de préférence par un centre du creux délimité par la portion d'étanchéité.

La portion d'étanchéité forme une boucle fermée délimitant intérieurement ledit creux, la boucle fermée étant préférentiellement de forme sensiblement circulaire à l'état non-contraint. D'autres formes peuvent néanmoins être adoptées comme une forme ovale ou oblongue, sans sortir du cadre de l'invention.

La portion d'étanchéité est traversée par un ou plusieurs orifices de pressurisation du creux. Cela permet de renforcer le contact entre la portion d'étanchéité délimitant ce creux, et les éléments de carter et de nacelle.

La portion d'étanchéité présente au moins l'une des caractéristiques suivantes, et de préférence la combinaison de chacune de ces caractéristiques :
- elle est réalisée à base d'un matériau élastomère, de préférence un matériau élastomère silicone ;
- elle comprend au moins une couche fibreuse de renfort, de préférence en polyester;
- elle comporte au moins une couche extérieure antifriction, de préférence en tissu polyester précuit.

L'invention a également pour objet un ensemble propulseur pour aéronef comprenant une turbomachine d'aéronef à double flux, une nacelle, ainsi qu'au moins un tel dispositif d'étanchéité à l'air interposé entre un élément de carter de la turbomachine, et un élément de nacelle.

De préférence, l'élément de carter est une virole extérieure d'un carter intermédiaire de la turbomachine, et l'élément de nacelle est un capotage délimitant radialement vers l'extérieur une veine secondaire de l'ensemble propulseur.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
[Fig. 1] est une vue partielle et schématique en perspective d'un ensemble propulseur selon un mode de réalisation préféré de l'invention ;
[Fig. 2] représente une vue en section transversale d'une partie de l'ensemble propulseur montré sur la figure précédente, montrant en particulier l'implantation d'un dispositif d'étanchéité selon un mode de réalisation préféré de l'invention, entre un élément de carter et un élément de nacelle ;
[Fig. 3] représente une vue en perspective de la partie montrée sur la figure précédente ;
[Fig. 4] représente une vue en section transversale quelconque du dispositif d'étanchéité montré sur les figures 2 et 3, avec ce dispositif se présentant à l'état non-contraint ;
[Fig. 5] représente une vue similaire à celle de la figure 4, selon une alternative de réalisation ;
[Fig. 6] représente une vue similaire à celle des figures 4 et 5, selon une autre alternative de réalisation ;
[Fig. 7] représente une vue schématique similaire à celle de la figure 2, avec le dispositif d'étanchéité présentant une compression minimale entre le carter et la nacelle ; et
[Fig. 8] représente une vue schématique similaire à celle de la figure 2, avec le dispositif d'étanchéité présentant une compression maximale entre le carter et la nacelle.

### EXPOSE DETAILLE DE MODES DE REALISATION PREFERES

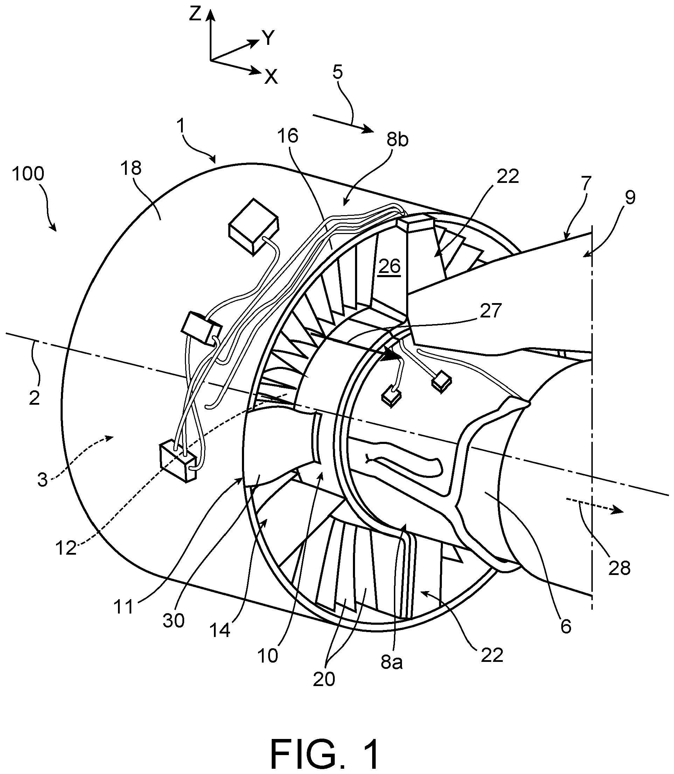

En référence tout d'abord à la figure 1, il est représenté partiellement un ensemble propulseur 100 selon un mode de réalisation préféré de l'invention. Cet ensemble 100 comporte une turbomachine 1 à double flux pour aéronef, un mât d'accrochage 9 de cette turbomachine sur un élément de voilure de l'aéronef (non représenté), ainsi qu'une nacelle 11 représentée que très partiellement.

L'ensemble propulseur 100 présente une direction longitudinale X, correspondant également à la direction longitudinale de la turbomachine 1 et à celle du mât 9. L'ensemble 100 présente également une direction transversale Y, ainsi qu'une direction verticale Z, correspondant à la direction de la hauteur. Les trois directions X, Y et Z sont orthogonales entre elles et forment un trièdre direct.

De préférence, le mât 9 permet de suspendre la turbomachine 1 sous une aile de l'aéronef. Ce mât comporte une partie structurale destinée à la reprise des efforts provenant de la turbomachine, cette partie étant habituellement dénommée structure primaire ou structure rigide. Elle adopte généralement la forme d'un caisson, dont seule une extrémité amont 7 est représentée sur la figure 1. Le mât est également équipé de structures secondaires (non représentées) sous forme de carénages aérodynamiques.

Dans le mode de réalisation préféré décrit et représenté, la turbomachine 1 est un turboréacteur à double flux, et à double corps. Le turboréacteur 1 présente un axe central longitudinal 2 parallèle à la direction X, et autour duquel s'étendent ses différents composants. Elle comprend, d'amont en aval selon une direction principale 5 d'écoulement des gaz à travers cette turbomachine, une soufflante 3 puis un générateur de gaz formé classiquement par des compresseurs, une chambre de combustion et des turbines. Ces éléments du générateur de gaz sont entourés par un carter central 6, également dénommé carter « core », qui délimite radialement vers l'intérieur un compartiment inter-veine 8a. Ce compartiment 8a est délimité par ailleurs radialement vers l'extérieur par un ou plusieurs capotages, dont un anneau amont 10 qui est le seul représenté sur la figure 1. L'anneau amont 10 est agencé dans la continuité aval d'un moyeu 12 d'un carter intermédiaire 14 du turboréacteur. Le carter intermédiaire 14 comporte également une virole extérieure 16 se situant dans la continuité aval d'un carter de soufflante 18. Il comporte aussi des aubes directrices de sortie 20, agencées en aval des aubes de soufflante et reliant le moyeu 12 à la virole extérieure 16.

Le carter de soufflante 18 et la virole extérieure 16 délimitent ensemble, radialement vers l'intérieur, un compartiment de soufflante 8b. Ce compartiment 8b est délimité par ailleurs radialement vers l'extérieur par un ou plusieurs capotages (non représentés), faisant partie de la nacelle 11. Tout comme le compartiment inter-veine 8a, ce compartiment 8b loge des équipements et des servitudes, comme cela est largement connu de l'art antérieur.

Un ou plusieurs bras 22 sont prévus pour relier les deux compartiments 8a, 8b. Ce sont par exemple deux bras 22 qui équipent le turboréacteur, respectivement agencés dans des positions horaires dites à 12h et à 6h. Ces bras 22 sont creux, et ils permettent par exemple de faire circuler des câbles électriques, et/ou des canalisations fluidiques. Plus précisément, ces bras relient une partie aval de la virole extérieure 16, à l'anneau amont 10. Pour ce faire, ils traversent une veine secondaire 26 du turboréacteur, cette veine étant délimitée vers l'extérieur par la virole 16, ainsi que par un ou plusieurs capotages de nacelle 30 situés dans la continuité aval de la virole 16. Cette veine 26 permet la circulation d'un flux secondaire, schématisé par la flèche 27.

La veine secondaire 26 est également en partie délimitée vers l'intérieur par l'anneau amont 10 du compartiment inter-veine 8a. Elle s'ajoute à une veine primaire traversée par un flux primaire 28, qui transite de manière classique par le générateur de gaz.

L'invention réside dans la manière d'opérer une jonction étanche à l'air entre l'extrémité aval de la virole 16 du carter intermédiaire, et l'extrémité amont du capotage de nacelle 30. Cette jonction étanche permet en effet de limiter, voire d'interdire la recirculation du flux secondaire 27 en direction du compartiment nacelle 8b, puisqu'une telle recirculation est synonyme de perte de performances associées à l'ensemble propulseur, avec un impact sur la consommation spécifique de carburant.

Pour assurer cette étanchéité, il est prévu un ou plusieurs dispositifs d'étanchéité à l'air interposés entre la virole 16 du carter intermédiaire, et le/les capotages de nacelle 30. De préférence, ce sont plusieurs dispositifs d'étanchéité de conception identique ou similaire qui se succèdent le long de la direction circonférentielle de la virole 16. Chaque dispositif peut présenter une longueur circonférentielle allant jusqu'à 1,5 ou 2 m. Néanmoins, une conception non-sectorisée reste envisageable, sans sortir du cadre de l'invention.

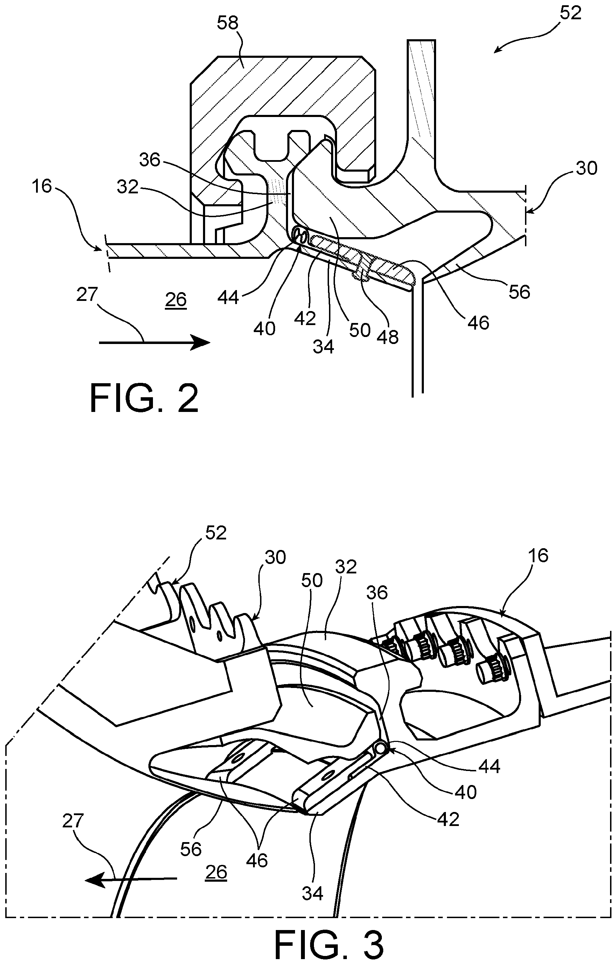

L'implantation de l'un de ces dispositifs d'étanchéité, au sein de l'ensemble propulseur, va à présent être décrite en référence aux figures 2 et 3.

La virole 16 du carter intermédiaire 14 se termine vers l'aval par une collerette radiale 32, et par une bride annulaire de support 34 de forme préférentiellement tronconique qui se rétrécit en allant vers l'aval. Ces deux éléments 32, 34 forment un espace annulaire 36 dans lequel se loge l'un des dispositifs d'étanchéité à l'air 40. Ce dernier présente deux portions distinctes solidaires l'une de l'autre. Il s'agit tout d'abord d'une languette de fixation 42, en appui surfacique contre la bride de support 34. La languette de fixation 42 est collée avec une colle silicone RTV (de l'anglais *« Room Temperature Vulcanisation »*) sur cette bride 34, et préférentiellement enserrée entre cette bride 34 et des platines de fixation 46 la recouvrant. De préférence, la languette 42 est ainsi collée, tandis que les platines 46 servent de butée ainsi qu'à protéger cette languette 42.

Les platines 46 sont fixées par rivets 48 ou éléments similaires sur la bride de support 34, en étant plaquées contre la surface radialement extérieure de la languette de fixation 42. Celle-ci s'étend selon la direction circonférentielle tout le long du dispositif 40, tout comme une portion d'étanchéité 44 située à l'extrémité amont de la languette 42. Cette portion d'étanchéité 44, qui sera décrite en détail ultérieurement, se situe dans l'espace annulaire 36 de manière à ce que sa surface extérieure soit contactée par la bride 34, et par un bourrelet d'étanchéité 50 du capotage de nacelle 30.

Le bourrelet d'étanchéité 50 est intégré à une bague de jonction 52 située à l'extrémité amont du capot de nacelle 30. Cette bague 52 présente une partie dont la demi-section transversale prend la forme d'un J, dont l'extrémité radialement intérieure appuie sur la portion d'étanchéité 44 du dispositif 40. Cette extrémité radialement intérieure du J correspond ainsi au bourrelet d'étanchéité 50. L'extrémité radialement extérieure du J peut quant à elle former une bride festonnée pour sa fixation sur une autre partie du capotage de nacelle 30.

La bague 52 comporte également une lèvre d'étanchéité 56, dont l'extrémité libre amont se situe en regard d'une extrémité libre aval de la bride de support 34. La coopération entre ces deux extrémités permet de réduire l'accès de l'air de la veine secondaire 26, à l'espace annulaire 36 logeant le bourrelet 50.

Un anneau ou secteur d'anneau extérieur 58 peut venir enserrer axialement l'extrémité radialement extérieure du J et la collerette 32 de la virole 16 du carter intermédiaire 14, comme cela a été représenté sur la figure 2.

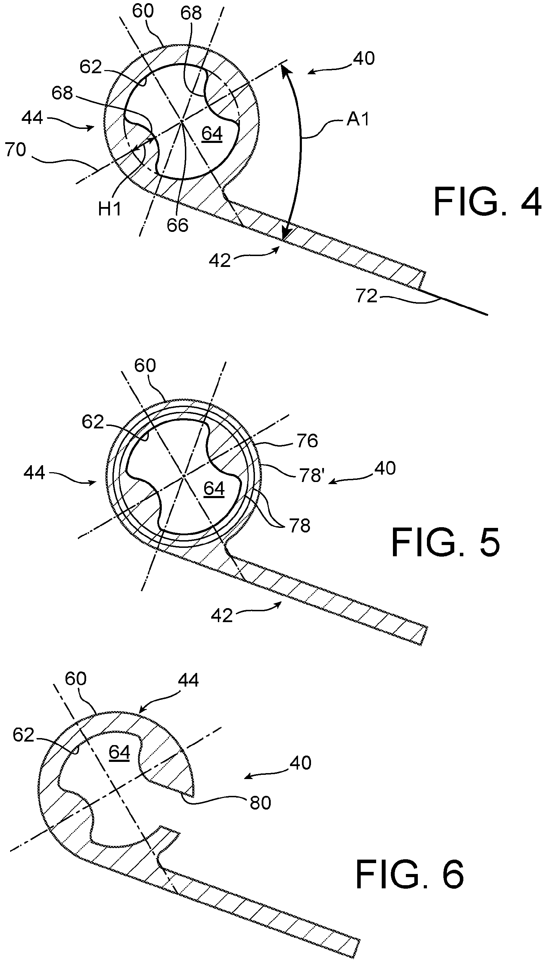

La figure 4 représente le dispositif d'étanchéité à l'air 40, dans une section transversale quelconque. De préférence, cette section reste identique ou similaire tout le long du dispositif 40, selon la direction circonférentielle de ce dernier.

Comme évoqué précédemment, la portion d'étanchéité 44 est agencée de manière solidaire à l'extrémité de la languette de fixation 42, ces deux éléments 42, 44 étant réalisés au sein d'une même pièce. À l'état non-contraint tel que représenté sur la section transversale de la figure 4, la portion d'étanchéité 44 présente une forme globale de boucle fermée, sensiblement circulaire. Elle dispose d'une surface extérieure 60 sensiblement circulaire, ainsi que d'une surface intérieure 62 délimitant un creux 64 de centre 66. A l'état non-contraint, la surface extérieure 60 peut présenter un diamètre compris entre 6 et 10 mm, par exemple de l'ordre de 8 mm.

La surface intérieure 62 n'est pas entièrement circulaire, puisqu'elle définit deux protubérances opposées 68, de préférence en forme de lobes se projetant vers l'intérieur du creux 64. En dehors des zones incorporant les protubérances 68, la surface intérieure 62 peut présenter un diamètre compris entre 4 et 8 mm, par exemple de l'ordre de 6 mm. Ainsi, la portion d'étanchéité 44 présente une épaisseur variable, avec des protubérances 68 qui font saillie sur une hauteur H1 de l'ordre de 1 et 3 mm.

Les deux protubérances 68 sont de préférence diamétralement opposées, en s'étendant l'une vers l'autre selon des directions de hauteur de protubérance 70 qui sont ici confondues, et qui passent par le centre du creux 64.

En fonctionnement, dans les cas de contraintes élevées s'appliquant sur la portion d'étanchéité 44, les deux protubérances 68 sont destinées à venir au contact l'une de l'autre afin de limiter l'affaissement de cette portion 44.

Un angle A1 préféré est retenu entre la direction de hauteur de protubérance 70, et la direction 72 selon laquelle s'étend la languette de fixation 42. Cet angle est déterminé de manière à s'assurer que suite à une déformation conséquente de la portion d'étanchéité 44 entre la nacelle et la virole du carter intermédiaire, les deux protubérances 68 entrent bien au contact l'une de l'autre. Cet angle A1 et de l'ordre de 50° à l'état non-contraint. Par conséquent, en choisissant cet ordre de grandeur pour l'angle A1, il est avantageusement tenu compte du fait que l'écrasement de la portion d'étanchéité 44 entre la nacelle et la virole provoque également une modification de l'orientation de la direction 70 des protubérances. En effet, cette direction 70 des deux protubérances 68 a tendance à faire évoluer l'angle A1 vers la valeur de 90°, au fur et à mesure que le niveau de contraintes s'accentue sur la portion d'étanchéité 44.

La portion d'étanchéité 44, tout comme la languette étanchéité 42, peut être réalisé à base d'un matériau élastomère, de préférence en matériau élastomère silicone. A titre d'exemple, le dispositif d'étanchéité 40 peut être réalisé d'une seule pièce, uniquement à l'aide de ce matériau élastomère. Dans un autre mode de réalisation schématisé sur la figure 5, la portion d'étanchéité 44 présente une base 76 en matériau élastomère, qui est complétée par au moins une couche fibreuse de renfort 78. Celle-ci permet d'augmenter la rigidité de la portion d'étanchéité 44, en particulier lorsque son niveau de déformation n'est pas suffisamment important pour amener les deux lobes 68 au contact l'un de l'autre.

Chaque couche fibreuse est de préférence circulaire, suivant la forme générale de la portion d'étanchéité 44. Il peut s'agir d'un nombre de couches compris entre un et trois, par exemple deux couches de renfort 78 noyées dans la base 76, et une couche extérieure 78' formant la surface extérieure 60. Cette couche extérieure 78' présente une fonction antifriction, de manière à limiter les frottements de la virole et du capotage de nacelle sur la portion d'étanchéité 44 lors du montage de ce capotage, et limiter ainsi les effets d'étirement axial de cette portion 44. Pour assurer cette fonction antifriction, la couche extérieure 78' est de préférence réalisée en tissu polyester précuit, par exemple avec plusieurs couches de ce type de tissu. La couche extérieure 78' peut uniquement servir de revêtement antifriction, ou bien assurer également une fonction de renfort comme les couches noyées 78. Ces dernières sont par exemple réalisées polyester. Une combinaison de ces matériaux est également possible, sans sortir du cadre de l'invention.

Quels que soient le/les matériaux retenus pour la réalisation de la portion d'étanchéité 44, celle-ci s'avère soit totalement fermée tout le long de la boucle, soit équipée d'un ou plusieurs orifices 80 la traversant. Cette autre alternative est schématisée sur la figure 6. Les orifices 80 assurent la pressurisation du creux 64, en laissant pénétrer l'air du flux secondaire dans ce même creux. Il en résulte un meilleur contact entre la surface extérieure 60 de la portion d'étanchéité 44, et les deux éléments à étancher. Dans cette alternative, les orifices de pressurisation 80 sont pratiqués de manière à faire conserver à la portion d'étanchéité 44 un caractère de boucle fermée, de sorte qu'ils ne s'étendent chacun que sur une partie de la longueur circonférentielle du dispositif 40.

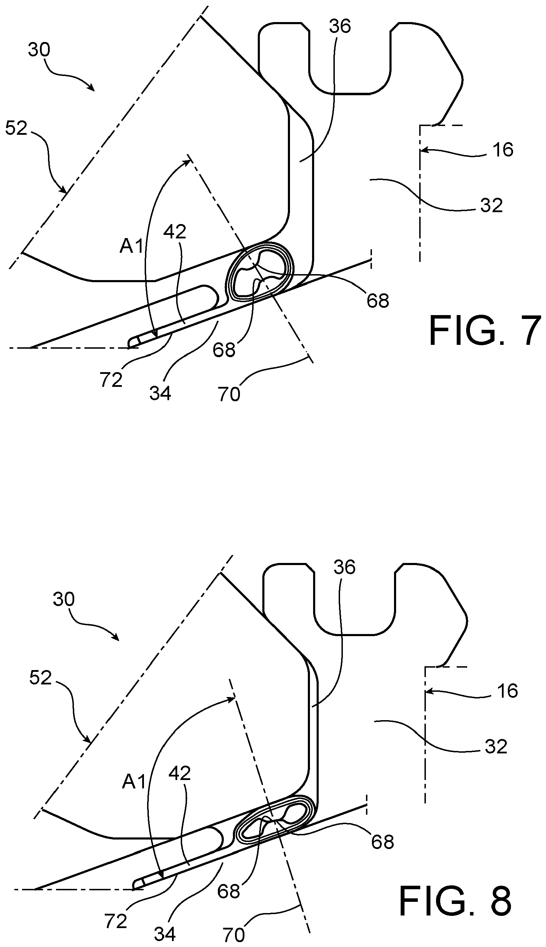

Enfin, les figures 7 et 8 montrent le dispositif d'étanchéité à l'air 40 dans différents niveaux de compression entre la bride 34 du carter intermédiaire 14, et la bague de jonction 52 du capotage de nacelle 30. Ce niveau de compression varie en raison des tolérances de fabrication et d'assemblage, mais également en fonction des déformations et des déplacements relatifs observés en fonctionnement entre ces deux éléments. La figure 7 montre un niveau de déformation minimal, rencontré lorsque la bague 52 est le plus éloigné de la bride 34. Dans ce cas de figure, les deux lobes 68 sont écartés l'un de l'autre. En revanche, la figure 8 montre un niveau de déformation maximal, rencontré lorsque la bague 52 est très proche de la bride 34. Dans ce cas de figure, le contact entre les deux lobes 68 participe à la rigidité de la portion d'étanchéité 44, dont l'affaissement s'en trouve limité. Les contacts entre cette portion étanchéité 44 et les deux éléments 52, 34 sont renforcés, impliquant des risques nuls ou limités de fuites d'air provenant de la veine secondaire 26. Sur ces figures 7 et 8, il est également schématisé l'évolution de la valeur de l'angle A1, qui augmente avec le niveau de compression de la portion d'étanchéité 44. Dans l'état de compression maximale représenté sur la figure 8, avec un angle A1 proche ou égal à 90°, les lobes 68 sont orientés avec leur direction 70 localement sensiblement orthogonale aux surfaces de contact prévues sur la bague 52 et la bride 34.

Bien entendu, diverses modifications peuvent être apportées par l'homme du métier à l'invention qui vient d'être décrite, uniquement à titre d'exemples non limitatifs, et dont la portée est définie par les revendications annexées. En particulier, le dispositif d'étanchéité à l'air décrit ci-dessus pourrait être implanté entre d'autres éléments de carter et de nacelle, sans sortir du cadre de l'invention.

## Revendications

1. Dispositif d'étanchéité à l'air (40) destiné à être interposé entre un élément de carter (16) de turbomachine d'aéronef à double flux et un élément de nacelle (30), le dispositif d'étanchéité comprenant une languette de fixation (42) à l'extrémité de laquelle se trouve une portion d'étanchéité (44) présentant une surface extérieure (60) destinée à être contactée par l'élément de carter et l'élément de nacelle, et une surface intérieure (62) délimitant un creux (64),
**caractérisé en ce que** la surface intérieure (62) définit deux protubérances opposées (68), s'étendant à l'intérieur du creux en direction l'une de l'autre, et **en ce qu'**en section transversale du dispositif d'étanchéité, chaque protubérance (68) définit,dans l'état non-contraint de la portion d'étanchéité, une direction de hauteur de protubérance (70) agencée de manière à former un angle (A1) compris entre 40 et 60° avec une direction (72) selon laquelle s'étend la languette de fixation (42).

2. Dispositif selon la revendication 1, **caractérisé en ce que** chaque protubérance (68) s'étend en direction d'un centre (66) du creux (64) délimité par la portion d'étanchéité.

3. Dispositif selon la revendication précédente, **caractérisé en ce que** les directions de hauteur de protubérance (70) des deux protubérances (68) sont confondues, en passant de préférence par un centre (66) du creux (64) délimité par la portion d'étanchéité.

4. Dispositif selon l'une quelconque des revendications précédentes, **caractérisé en ce que** la portion d'étanchéité (44) forme une boucle fermée délimitant intérieurement ledit creux (64), la boucle fermée étant préférentiellement de forme sensiblement circulaire à l'état non-contraint.

5. Dispositif selon la revendication 4, **caractérisé en ce que** la portion d'étanchéité (44) est traversée par un ou plusieurs orifices (80) de pressurisation du creux (64).

6. Dispositif selon l'une quelconque des revendications précédentes, **caractérisé en ce que** la portion d'étanchéité (44) présente au moins l'une des caractéristiques suivantes, et de préférence la combinaison de chacune de ces caractéristiques :
- elle est réalisée à base d'un matériau élastomère, de préférence un matériau élastomère silicone ;
- elle comprend au moins une couche fibreuse de renfort (78), de préférence en polyester;
- elle comporte au moins une couche extérieure antifriction (78').

7. Ensemble propulseur (100) pour aéronef comprenant une turbomachine d'aéronef (1) à double flux, une nacelle (11), ainsi qu'au moins un dispositif d'étanchéité à l'air (40) selon l'une quelconque des revendications précédentes, interposé entre un élément de carter de la turbomachine, et un élément de nacelle de la nacelle.

8. Ensemble selon la revendication 7, **caractérisé en ce que** l'élément de carter est une virole extérieure (16) d'un carter intermédiaire de la turbomachine, et **en ce que** l'élément de nacelle est un capotage (30) délimitant radialement vers l'extérieur une veine secondaire (26) de l'ensemble propulseur.

## Patentansprüche

1. Luftdichtungsvorrichtung (40), die dazu bestimmt ist, zwischen einem Gehäuseelement (16) eines Flugzeug-Mantelstromtriebwerks und einem Gondelelement (30) eingefügt zu werden, wobei die Dichtungsvorrichtung eine Befestigungslasche (42) umfasst, an deren Ende sich ein Dichtungsabschnitt (44) befindet, der eine Außenfläche (60), die dazu bestimmt ist, vom Gehäuseelement und dem Gondelelement berührt zu werden, und eine Innenfläche (62) aufweist, die einen Hohlraum (64) begrenzt,
**dadurch gekennzeichnet, dass** die Innenfläche (62) zwei gegenüberliegende Vorsprünge (68) definiert, die sich innerhalb des Hohlraums in Richtung zueinander erstrecken, und dadurch, dass im Querschnitt der Dichtungsvorrichtung jeder Vorsprung (68) im unbelasteten Zustand des Dichtungsabschnitts eine Vorsprungs-Höhenrichtung (70) definiert, die so eingerichtet ist, dass sie einen Winkel (A1) im Bereich zwischen 40 und 60° zu einer Richtung (72) bildet, in der sich die Befestigungslasche (42) erstreckt.

2. Vorrichtung nach Anspruch 1, **dadurch gekennzeichnet, dass** sich jeder Vorsprung (68) in Richtung eines Mittelpunkts (66) des Hohlraums (64), der vom Dichtungsabschnitt begrenzt wird, erstreckt.

3. Vorrichtung nach dem vorstehenden Anspruch, **dadurch gekennzeichnet, dass** die Vorsprungs-Höhenrichtungen (70) der zwei Vorsprünge (68) zusammenfallen, wobei sie bevorzugt durch einen Mittelpunkt (66) des Hohlraums (64), der vom Dichtungsabschnitt begrenzt wird, verlaufen.

4. Vorrichtung nach einem der vorstehenden Ansprüche, **dadurch gekennzeichnet, dass** der Dichtungsabschnitt (44) eine geschlossene Schleife bildet, die im Inneren den Hohlraum (64) begrenzt, wobei die geschlossene Schleife im unbelasteten Zustand vorzugsweise von im Wesentlichen kreisförmiger Form ist.

5. Vorrichtung nach Anspruch 4, **dadurch gekennzeichnet, dass** der Dichtungsabschnitt (44) von einer oder mehreren Öffnungen (80) zur Druckbeaufschlagung des Hohlraums (64) durchquert wird.

6. Vorrichtung nach einem der vorstehenden Ansprüche, **dadurch gekennzeichnet, dass** der Dichtungsabschnitt (44) mindestens eines der folgenden Merkmale, und bevorzugt die Kombination jedes dieser Merkmale aufweist:
- er ist aus einem Elastomermaterial, bevorzugt einem Silikonelastomermaterial, hergestellt;
- er umfasst mindestens eine faserige Verstärkungsschicht (78), bevorzugt aus Polyester;
- er umfasst mindestens eine äußere Antireibungsschicht (78').

7. Antriebsanordnung (100) für ein Flugzeug, die ein Flugzeug-Mantelstromtriebwerk (1), eine Gondel (11) sowie mindestens eine Luftdichtungsvorrichtung (40) nach einem der vorstehenden Ansprüche umfasst, welche zwischen einem Gehäuseelement des Triebwerks und einem Gondelelement der Gondel eingefügt ist.

8. Anordnung nach Anspruch 7, **dadurch gekennzeichnet, dass** das Gehäuseelement ein Außenmantel (16) eines Zwischengehäuses des Triebwerks ist, und dadurch, dass das Gondelelement eine Verkleidung (30) ist, die einen Sekundärstrom (26) der Antriebsanordnung radial nach außen begrenzt.

## Claims

1. An air-sealing device (40) intended to be inserted between an aircraft dual-flow turbine engine casing element (16) and a nacelle element (30), the sealing device comprising a fixing tab (42) at the end of which there is a sealing portion (44) having an outer surface (60) intended to be contacted by the casing element and the nacelle element, and an inner surface (62) delimiting a hollow (64),
**characterised in that** the inner surface (62) defines two opposite protuberances (68), extending inside the hollow towards each other, and **in that** in cross section of the sealing device each protuberance (68) defines, in an unconstrained state of the sealing portion, a protuberance height direction (70) arranged to form an angle (A1) comprised between 40 and 60° with a direction (72) wherein the fixing tab (42) extends.

2. The device according to claims 1, **characterised in that** each protuberance (68) extends towards a centre (66) of the hollow (64) delimited by the sealing portion.

3. The device according to the preceding claim, **characterised in that** the protuberance height directions (70) of the two protuberances (68) are coincident, preferably passing through a centre (66) of the hollow (64) delimited by the sealing portion.

4. The device according to any one of the preceding claims, **characterised in that** the sealing portion (44) forms a closed loop internally delimiting said hollow (64), the closed loop preferably being of substantially circular shape in the unconstrained state.

5. The device according to claim 4, **characterised in that** the sealing portion (44) is crossed by one or more pressurisation orifices (80) in the hollow (64).

6. The device according to any one of the preceding claims, **characterised in that** the sealing portion (44) has at least one of the following features, and preferably the combination of each of these features:
- it is made from an elastomeric material, preferably a silicone elastomeric material;
- It comprises at least one fibrous reinforcing layer (78), preferably made of polyester;
- it includes at least one outer anti-friction layer (78').

7. A propulsion unit (100) for an aircraft comprising an aircraft dual-flow turbine engine (1), a nacelle (11), as well as at least one air-sealing device (40) according to any one of the preceding claims, inserted between a casing element of the turbine engine, and a nacelle element of the nacelle.

8. The unit according to claim 7, **characterised in that** the casing element is an outer shroud (16) of an intermediate casing of the turbine engine, and **in that** the nacelle element is a cowling (30) radially outwardly delimiting a secondary flow path (26) of the propulsion unit.
